# EUROPÄISCHE PATENTSCHRIFT

(11) **EP 3 708 328 B1**
(45) Veröffentlichungstag und Bekanntmachung des Hinweises auf die Patenterteilung: **22.12.2021**
(21) Anmeldenummer: 20161912.9
(22) Anmeldetag: 09.03.2020
(51) Int. Cl.: B29C 45/00, B29C 45/33, B29C 45/26, B29L 31/56

(54) **WERKZEUG ZUM SPRITZGIESSEN VON KUNSTSTOFF-FORMTEILEN UND VERFAHREN ZUM BEWEGEN EINES SCHIEBERS EINER WERKZEUGHÄLFTE DES WERKZEUGS**
TOOL FOR INJECTION MOULDING OF MOULDED PLASTIC PARTS AND METHOD FOR MOVING A SLIDE OF A TOOL HALF OF THE TOOL
OUTIL DE MOULAGE PAR INJECTION DES PIÈCES MOULÉES EN MATIÈRE PLASTIQUE ET PROCÉDÉ DE DÉPLACEMENT D'UN COULISSEAU D'UNE MOITIÉ D'OUTIL

(30) Priorität: 13.03.2019 DE 102019001725
(43) Veröffentlichungstag der Anmeldung: 16.09.2020
(73) Patentinhaber: Braunform GmbH, 79353 Bahlingen (DE)
(72) Erfinder: SEEBACHER, Georg Franz, 79350 Sexau (DE)
(74) Vertreter: Kleine, Hubertus

(56) Entgegenhaltungen:
- GB-A- 1 480 744
- US-A1- 2004 222 559
- US-A1- 2018 001 524

## Beschreibung

Die Erfindung betrifft ein Werkzeug zum Spritzgießen von Kunststoff-Formteilen und ein Verfahren zum Bewegen eines Schiebers einer Werkzeughälfte des Werkzeugs zum Verschwenken eines Formteilabschnitts oder zum Anordnen eines formgestaltenden Abschnitts in der Kavität.

Aus dem Stand der Technik sind Spritzgusswerkzeuge zur Herstellung von Kunststoff-Formteilen hinreichend bekannt, und auch, dass diese üblicherweise zwei auseinander und zusammen fahrbare Werkzeughälften, ein Düsenbauteil und ein Auswerferbauteil haben, das einen oder mehrere Formeinsätze mit den entsprechenden Form-Kavitäten zur Aufnahme der Gussmasse für Formteile aufweist. Im zusammen gefahrenen Zustand der Werkzeugbauteile liegt eine komplette Formkavität geschlossen vor. Aus zwei Abschnitten bestehende Formteile, die durch ein angespritztes Scharnier verbunden sind, können einteilig gespritzt und zusammengefügt werden, bevor sie als fertig gegossene/gespritzte Formteile ausgeworfen werden. Dabei wird der eine Abschnitt, angelenkt an das Scharnier, über den anderen Teil geschwenkt und bspw. verrastet. Der zu verschwenkende Teil könnte z. B. ein Deckel sein; dann weist das Auswerferbauteil entsprechend einen Verdeckelungsschieber auf, der den Abschnitt des Formteils, der den Deckel bildet, über eine Schiebebewegung schwenkt bzw. "schiebt". Entsprechend ist jeder Form-Kavität in den Formeinsätzen je ein Verdeckelungsschieber (oder kurz Schieber) zugeordnet, der jeweils neben einem Formeinsatz angeordnet ist. Im Stand der Technik werden die Form-Kavitäten in Reihen parallel zueinander angeordnet und die Schieber können über die Form-Kavitäten geschoben werden.

Das Gleiche gilt für bekannte Formschieber, die bekanntermaßen genau so angeordnet sind wie bspw. Verdeckelungsschieber.

Durch die parallele Anordnung der Schieber-Kavitäten-Paare wird das Werkzeug sehr breit und benötigt viel Platz.

Bei bekannten Werkzeugen liegen auch die Einsätze sehr weit auseinander, und die Düsenabstände sind daher sehr groß. Die Fließwege im Heißkanalblock sind damit lang. Dadurch ergeben sich lange Verweilzeiten des Kunststoffs im Heißkanalblock und zusätzlich ein erhöhter Druckbedarf zum Füllen der Kavität.

Die US2018/0001524 offenbart ein Werkzeug zur zweistufigen Ausformung eines Lüfterrades aus einem duromeren Material. Im Rahmen dieser Ausformung wird in einer ersten Stufe ein Deckelunterteil mit Rippen gefertigt und in einer zweiten Stufe ein Deckel ausgeformt.

Ausgehend von diesem Stand der Technik ist es Aufgabe der vorliegenden Erfindung, ein Werkzeug zum Spritzgießen von Kunststoff-Formteilen kompakter zu gestalten, um die vorstehenden Nachteile zu vermeiden.

Diese Aufgabe wird durch ein Werkzeug mit den Merkmalen des Anspruchs 1 gelöst.

Weiterbildungen und bevorzugte Ausführungsformen des Werkzeugs sind in den Unteransprüchen ausgeführt.

Eine weitere Aufgabe besteht in der Schaffung von Verfahren zum ökonomischeren Bewegen eines Schiebers in einem temperaturführungsoptimierten, kompakten Werkzeug, mit dem vor dem Auswerfen des gespritzten Formteils ein schwenkbarer Abschnitt eines in dem Auswerferbauteil vorliegenden einteiligen Formteils verschwenkt werden kann, oder eines Formschiebers, mit dem ein formgestaltender Abschnitt zum Spritzgießen in der Kavität angeordnet werden kann. Diese Aufgaben werden durch die Verfahren mit den Merkmalen der Ansprüche 10, 11 und 12 gelöst.

Eine erste Ausführungsform eines erfindungsgemäßen Werkzeugs zum Spritzgießen von Kunststoff-Formteilen mit zwei Werkzeughälften, das ein Düsenbauteil und ein Auswerferbauteil, die zueinander verfahrbar sind, hat, bezieht sich darauf, dass eine der beiden Werkzeughälften eine Formplatte aufweist, die einen oder mehrere Formeinsätze mit einer Vielzahl Form-Kavitäten trägt, oder dass diese erste Werkzeughälfte eine Formplatte und eine Formeinsatzträgerplatte aufweist, die einen oder mehrere Formeinsätze mit einer Vielzahl Form-Kavitäten trägt. Die Form-Kavitäten sind jeweils dazu ausgebildet, mit an der anderen Werkzeughälfte vorliegenden komplementären Kavitäten Formteile zu bilden. Der Formeinsatz weist jeder Form-Kavität zugeordnet einen Schieber auf, der jeweils über einer kavitätenseitigen Oberfläche des Formeinsatzes zwischen zwei Positionen bewegbar angeordnet ist.

Das Düsenbauteil weist dabei in an sich bekannter Weise eine beheizbare Düse auf, über welche ein Thermoplast als Schmelze in die Kavität eingelassen werden kann.

Die vorgenannten Formkavitäten dienen dabei insbesondere zur Ausbildung von formgleichen Spritzlingen.

Ferner weist der Schieber ein oder mehrere Führungselement(e) auf, das/die mit einem Gegenführungselement in dem Formeinsatz in Eingriff steht/stehen. Dabei erstreckt sich von dem Schieber in Richtung Formplatte bzw. Formeinsatzträgerplatte ein Verbindungsbolzen, der in einer Führungsnut eines Drehrings geführt wird. Dabei sind die Verbindungsbolzen mehrerer Schieber umfänglich in einer entsprechenden Anzahl von Führungsnuten entlang dem Umfang des Drehrings verteilt angeordnet. Der Drehring ist mit einem auf der Formeinsatzträgerplatte angeordneten Antriebsring verbunden.

Der Schieber kann zwischen zwei Positionen bewegt werden, nämlich einer Ausgangsposition beabstandet von der Kavität und einer kavitätsnahen Endposition. Der zum Bewegen des gespritzten Formteils bzw. eines Formteilabschnitts vorgesehene Schieber nimmt während des Spritzgießens die Ausgangsposition ein und wird zum Bewegen des gespritzten Formteils bzw. eines Formteilabschnitts in die Endposition bewegt. Der als Formschieber mit einem formgestaltenden Abschnitt ausgebildete Schieber wird zum Spritzgießen in der Endposition angeordnet, in der der formgestaltende Abschnitt des Schiebers in die Kavität ragt. Zum Auswerfen des Formteils wird der Formschieber in die Ausgangsposition zurückbewegt.

In einer Ausführungsform, bei der zusätzliche Formeinsatzträgerplatten vorliegen, wird vorteilhaft eine Modulbauweise ermöglicht, die eine einfachere Handhabung der Baugruppe gestattet.

Der Schieber kann jeweils über einer kavitätenseitigen Oberfläche des Formeinsatzes zwischen zwei Positionen bewegt werden, oder er kann innerhalb des Formeinsatzes, d. h. zumindest partiell unterhalb der Oberfläche bzw. darin versenkt (als sogenannter Unterflurschieber) bewegt werden.

Der Schieber kann vorteilhaft entweder dazu ausgebildet sein, das Formteil oder einen Abschnitt des Formteils zu bewegen, oder - als Formschieber - beim Spritzgießen mit einem formgestaltenden Abschnitt des Schiebers beispielsweise zur Bildung von Löchern, Schlitzen oder Hinterschnitten etc. in die Kavität hineinzuragen.

In einer bevorzugten Ausführungsform kann die Werkzeughälfte, die die Formeinsätze mit den Schiebern und deren Antrieb aufweist, das Auswerferbauteil sein. Es ist grundsätzlich aber auch denkbar, dass ein Düsenbauteil entsprechende Formeinsätze mit Schiebern, insbesondere, wenn es sich dabei um Formschieber handelt, mit deren Antrieb aufweist.

Die spezifische Anordnung der Schieber in Bezug auf den Antriebsring, wobei die Schieber mit ihrer Längsrichtung entsprechend Kreissehnenabschnitten umfänglich in Bezug auf den Drehring orientiert sein können, erlaubt dabei eine kompaktere Bauteilausführung, wobei die platzsparende Anordnung des Antriebrings unterhalb des Einsatzes anstelle der bislang üblichen Anordnung neben bzw. durchgängig seitlich im Einsatz zur Kompaktheit beiträgt. Die gesamte Werkzeughälfte kann im Vergleich zum Stand der Technik mit gleicher Anzahl an Formeinsätzen und Kavitäten in der Breite deutlich verkleinert werden und baut in der Höhe nur gering auf. Dies kann insbesondere durch die gewinkelte Anordnung der Kavität-Schieber-Paarungen in jedem Formeinsatz zueinander erreicht werden, die sich aus der Verteilung über den Antriebsring ergibt, sodass sich eine optimale Bauraumnutzung ergibt. Bei beispielsweise vier Kavität-Schieber-Paaren kann jede Kavität-Schieber-Paarung um einen Winkel von 90° gedreht zu einer benachbarten Kavität- und Schieber-Paarung, quasi in einer Art verzahnter Anordnung, vorliegen. Vorteilhaft werden so zudem die Fließwege im Heißkanalblock verkürzt und damit die Verweilzeiten des Kunststoffs im Heißkanalblock reduziert. Das Anspritzen der Kavitäten während des Spritzgießens kann mit einer radialen Sidegate-Düse oder jeder anderen geeigneten Düse erfolgen, die sich für die spezifische Anordnung der Kavität-Schieber-Paarungen eignet, wie dies bei einer radialen Sidegate-Düse der Fall ist.

In einer bevorzugten Ausführungsform des Werkzeugs können pro Formeinsatz vier Schieber vorgesehen sein, die von einer gemeinsamen Betätigungsvorrichtung bewegt werden können. Die Kavitäten sind in analoger Weise zu den Schiebern angeordnet, d. h. in Bezug auf den Formeinsatz radial um ein Zentrum des Form-Einsatzes selbst. Die Schieber liegen auf einem Kreisumfang, der dem Kreisumfang des Antriebrings entspricht; die Kavitäten auf einem Kreis mit entsprechend kleinerem Radius, wobei der imaginäre Kreismittelpunkt der gleiche ist, nämlich der Mittelpunkt des Antriebsringes.

In einer weiteren Ausführungsform des erfindungsgemäßen Werkzeugs sind die Formteile einteilige Formteile. 'Einteilig' heißt im Sinne der Erfindung, dass jedes Formteil aus einem Guss besteht, also nicht mehrere Abschnitte erst aneinandergefügt werden müssen, sondern von vorneherein verbunden sind. So sind Formteile mit mehreren Abschnitten möglich, die durch Streben oder dünnwandige Bereiche (Filmscharniere) verbunden sind. Bevorzugt können die Formteile zwei oder mehr Abschnitte aufweisen, wobei ein Abschnitt oder mehrere Abschnitte über ein Scharnier mit einem zweiten, weiteren Abschnitt verbunden ist/sind. Hierbei ist der Schieber dazu ausgebildet, den mit dem Scharnier verbundenen zweiten Abschnitt zu schwenken - es handelt sich um sogenannte Deckelungsschieber.

In noch einer weiteren Ausführungsform des erfindungsgemäßen Werkzeugs ist der Schieber dazu ausgebildet, zum Spritzgießen einen formgestaltenden Abschnitt des Schiebers in die Kavität zu schieben. Damit sind Formschieber auch mit dem erfindungsgemäßen Werkzeug zu verwenden. Die Formschieber gestatten die Bildung einteiliger Formteile mit Löchern, Schlitzen, Hinterschnitten etc.

Der Schieber weist ein oder mehrere Führungselement(e) auf, das/die mit einem Gegenführungselement in dem Formeinsatz in Eingriff steht/stehen, wobei sich der Verbindungsbolzen von dem Schieber in Richtung Formplatte bzw. Formeinsatzträgerplatte erstreckt: Dabei kann die Lagerung des Verbindungsbolzens in der Führungsnut in einer einfachsten Ausführung etwa durch eine Abrundung des Bolzenendes erfolgen, so dass der abgerundete Bolzen in der durch die Führungsnut bereitgestellten Laufbahn läuft.

In einer bevorzugten Ausführungsform weist der Verbindungsbolzen zur verbesserten Lagerung in der Führungsnut des Drehrings ein Laufrollenlager auf, das in der Führungsnut geführt wird. Eine noch weitere Ausführungsform des erfindungsgemäßen Werkzeugs sieht alternativ oder zusätzlich vor, dass jeder Schieber an dem von dem in der Führungsnut geführten Ende, d. h. dem abgerundeten Ende bzw. dem Laufrollenlager, abgewandten Ende des Verbindungsbolzens ein sich horizontal wegerstreckendes Schieberteil mit einer Schieberspitze, bevorzugt einer Schieberspitze mit einer Schiebergabel mit Schieberzinken aufweist. Damit können bspw. Auswerferpins umfahren werden. "Umfahren" meint hier, dass durch die Gabel ein Gabelzinken rechts und ein Gabelzinken links an dem Auswerferpin vorbei "fährt" respektive vorbei geschoben wird.

Die Schieberspitze ist abgerundet, so dass die frisch gegossenen Formteile nicht beschädigt werden, wenn die Schieberspitze die Formteile berührt bzw. bewegt.

In einer weiteren Ausführungsform des erfindungsgemäßen Werkzeugs können Drehring und Antriebsring separat gefertigte Bauteile sein, die miteinander verbunden werden, allerdings können Drehring und Antriebsring auch einstückig miteinander verbunden, d. h. als einteiliges Ringbauteil gefertigt sein, das einen Drehringabschnitt und einen Antriebsringabschnitt aufweist.

Generell kann somit das Auswerferbauteil Auswerferpins aufweisen, die, nachdem das Formteil gegossen wurde, aus der kavitätenseitigen Oberfläche des Formeinsatzes herausfahrbar sind, wobei der Schieber jeweils derart ausgebildet ist, dass die Auswerferpins in einem Auswerfzustand umfahrbar sind. D. h., ein Schieber, der zur Deckelung des Formteils vorgesehen ist, kann, wie oben beschrieben, mit Zinken ausgebildet sein, um die Auswerferpins, die den Deckelabschnitt des Formteils anheben, zu umfahren. Bei einem Formschieber, der sich während des Spritzgießens in der Endposition befindet, in der der formgestaltende Abschnitt in die Kavität ragt, kann die Anordnung der Auswerferpins auf diesen formgestaltenden Abschnitt abgestimmt sein, sodass die Auswerferpins beim Entformen nicht mit dem Schieber kollidieren, wenn der Schieber auffährt.

Ferner sieht noch eine weitere Ausführungsform des erfindungsgemäßen Werkzeugs vor, dass der Schieber in einer Schienenführung als Gegenführungselement linear beweglich gelagert ist und der Formeinsatz Nuten aufweist, die in ihrer Ausrichtung der der Schienenführung entsprechen, wobei die Verbindungsbolzen der Schieber zusätzlich zur Führung mit den Laufrollenlagern in den Führungsnuten des Drehrings in diesen Nuten geführt sind. Dadurch wird eine lineare, geführte Bewegung ermöglicht, die ein schnelles Vorschieben des Schiebers ohne Verhaken ermöglicht.

Die Anordnung, Verteilung sowie Ausmaß und Verlauf der Führungsnuten auf dem Drehring richten sich nach den vorgesehenen Schieberhüben, die auch unterschiedlich sein können, etwa wenn der Formeinsatz eine große Kavität mit vier unterschiedlichen Konturen aufweist, die unterschiedliche Hübe benötigt. Handelt es sich aber um einen Formeinsatz mit mehreren gleichartigen, symmetrisch angeordneten Kavitäten bzw. Kavitätsabschnitten, die alle den gleichen Hub benötigen, kann die Mehrzahl der Verbindungsbolzen der mehreren Schieber umfänglich in der entsprechenden Anzahl der Führungsnuten äquidistant voneinander entlang dem Umfang des Drehrings angeordnet sein.

Die Schieber sind in jeden Formeinsatz integriert und können insgesamt mit einer gemeinsamen Betätigungsvorrichtung bedient werden. Dabei sind die Schieber über die Verbindungsbolzen mit der hinter dem jeweiligen Formeinsatz liegenden Betätigungsvorrichtung operativ gekoppelt.

Eine weitere Ausführungsform des erfindungsgemäßen Werkzeugs sieht vor, dass der Antriebsring mit einem Motor operativ gekoppelt ist, wobei der Antriebsring zumindest einen gezahnten Abschnitt aufweist, der mit einer Antriebsstange des Motors kämmt. In diesen gezahnten Abschnitt kann also ein Zahnrad oder eine Zahnstange eingreifen. Die Zahnstange bzw. das Zahnrad werden von einem entsprechenden Antrieb angetrieben. Dazu kann hinter dem Werkzeug eine zentral oder mittig geführte Antriebsstange vorgesehen sein, die mit einem Motor operativ verbunden ist. Die Antriebsstange ist zur KraftEinleitung von dem Motor zu einer Drehmoment-Einleitung auf Drehwellen verzahnt. Die Verzahnung kann dabei in einzelnen Abschnitten vorliegen oder die gesamte Antriebsstange kann verzahnt sein. In einer Ausführungsform weisen die Drehwellen zwei Zahnräder auf, die mit einer Welle verbunden sind. Ein erstes Zahnrad übernimmt die Bewegung der Antriebsstange und überträgt sie auf das zweite Zahnrad, dass die Bewegung dann auf die Verzahnungsabschnitte des Antriebsrings überträgt.

Der Antriebsring ist mit dem Drehring fest verbunden bzw. einstückig gefertigt, wodurch beide gemeinsam angetrieben werden können. Der Drehring weist eine oder mehrere Nuten auf, die als Laufbahnen für die Führungsbolzen dienen. Die Nuten des Drehrings sind vorzugsweise gekrümmt, können aber auch anders geformt sein, um eine beliebige Bewegung der Schieber zu realisieren. Ferner sind die Verbindungsbolzen in der bevorzugten Ausführungsform mit Laufrollenlagern versehen, die in den Nuten des Drehrings gelagert sind. Die Laufrollenlager können über einen Dorn, der ein Gewinde aufweist, mit dem Verbindungsbolzen verbunden werden. Der Verbindungsbolzen kann aber auch ohne Laufrollenlager mit einem abgerundeten Ende in der Führungsnut des Drehrings gelagert sein.

Damit eine Bewegung des Schiebers auf der Oberfläche des Formeinsatzes erfolgen kann, weist der Formeinsatz in einer weiteren Ausführungsform des erfindungsgemäßen Werkzeugs Schienen und eine entsprechend ausgerichtete Nut auf, die die Bewegung des Führungsbolzens begrenzen. Dazu bilden das Führungselement und das Gegenführungselement eine Schienenführung. Das Gegenführungselement kann eine Nut sein, in die das Führungselement als Feder eingreift oder auch umgekehrt. Die Führungsschiene als Gegenführungselement kann im Querschnitt dreieckig geformt sein, um die Bewegungskräfte des Schiebers aufzunehmen und diesen besser zu führen. Diese Führungsschienen können neben einer linearen Bewegung auch eine andere beliebige Kurvenform abbilden, so z. B. eine Kurve.

Der Formbereich, also der Bereich, in dem die Form-Kavitäten liegen, befindet sich mittig in Bezug auf den Antriebsring. Dazu weist der Antriebsring eine mittige Bohrung auf, so dass der Antriebsring ringförmig ist. Der Formbereich kann durch die Seitenwände der Bohrung mechanisch abgestützt werden, um auch Werkzeug-Schließ- und Auftriebskräfte zu leiten. In dem Formbereich sind in noch einer weiteren Ausführungsform des erfindungsgemäßen Werkzeugs Auswerferpins unterhalb der Formteil-Kavitäten angeordnet, die aus dem Formeinsatz heraus senkrecht zur kavitätenseitigen Oberfläche des Form-einsatzes herausgefahren werden können, um das fertige Formteil aus den Kavitäten zu lösen und schlussendlich auszuwerfen.

In einem erfindungsgemäßen Verfahren ist vorgesehen, dass zum Bewegen eines Schiebers der entsprechenden (ersten) Werkzeughälfte eines erfindungsgemäßen Werkzeugs der auf der Formplatte oder Formeinsatzträgerplatte angeordnete Antriebsring zusammen mit dem verbundenen Drehring gedreht wird, wobei der Verbindungsbolzen, der mit dem Schieber verbunden ist, in der Führungsnut des Drehrings geführt wird, sodass der Schieber mittels des in dem Gegenführungselement geführten Führungselements von einer Ausgangsposition in eine Endposition verfahren wird. Auf diese Weise können mehrere Schieber eines Formeinsatzes, die entsprechend Kreissehnenabschnitten umfänglich in Bezug auf den Drehring platzsparend angeordnet sein können, gleichzeitig bewegt werden.

In Weiterbildungen kann das erfindungsgemäße Verfahren zum Bewegen eines Schiebers sowohl in einem Werkzeug zum Schwenken eines Abschnitts eines in einem Auswerferbauteil vorliegenden einteiligen Formteils (Deckelungsschieber) als auch in einem Werkzeug zum Gestalten der Form-Kavität (Formschieber) in zumindest einer der beiden Werkzeughälften genutzt werden:
Das Verfahren zum Schwenken eines Abschnitts eines Formteils in einem Auswerferbauteil wird mit einem vorliegenden einteiligen Formteil durchgeführt, wobei der zu schwenkende Abschnitt ein zweiter Abschnitt ist, der über ein Scharnier mit einem ersten Abschnitt verbunden ist, und umfasst folgende Schritte:
   a) Ausfahren des Auswerferpins, der unter dem zweiten Abschnitt angeordnet ist und dadurch Lösen des zweiten Abschnitts aus der Formteil-Kavität;
   b) Bewegen des Schiebers aus seiner Ausgangsposition durch das erfindungsgemäße Verfahren zum Bewegen des Schiebers; wobei
      die Schieberspitze unter den zweiten Abschnitt des Formteils fährt und diesen aufrichtet, und
      während des kontinuierlichen Weiterbewegens des Schiebers in die Endposition die Schieberzinken den Auswerferpin umfahren und die Schieberspitze den zweiten Abschnitt des Formteils umklappt und die Schieberzinken über den zweiten Abschnitt des Formteils fahren, so dass der zweite Abschnitt des Formteils auf dem ersten Abschnitt des Formteils zu liegen kommt,
   c) Zurückbewegen des Schiebers in seine Ausgangsposition durch Drehen des Antriebsrings in zu Schritt b) entgegengesetzter Richtung, bevor das Auswerfen des Formteils durch Ausfahren der Auswerferpins erfolgt, die unter dem ersten Abschnitt des Formteils vorliegen und dadurch das Formteil aus der Formteil-Kavität lösen.

Es sind insbesondere zumindest zwei zueinander beabstandete Schieberzinken vorgesehen, wobei der Abstand zwischen den Schieberzinken so gewählt ist, dass ein Verschlusselement des Formteil-Deckels, z.B. eine Schnappnase oder dergleichen, beim Überfahren des Deckels durch die Schieberzinken zwischen den Zinken positioniert ist, so dass das besagte Verschlusselement nicht abreißt.

Die weitere Verfahrensvariante zum Gestalten der Form-Kavität in zumindest einer der Werkzeughälften, dem Auswerferbauteil und/oder dem Düsenbauteil, während des Spritzgießens sieht das Anordnen eines formgestaltenden Abschnitts eines Schiebers in der Kavität vor, wobei das Anordnen des Schiebers durch ein erfindungsgemäßes Verfahren zum Bewegen des Schiebers erfolgt. Dabei wird der Schieber nach dem Spitzgießen in seine Ausgangsposition durch Drehen des Antriebsrings in zum Anordnen des Schiebers in der Kavität entgegengesetzter Richtung zurückbewegt wird, bevor das Auswerfen des Formteils oder, wenn die Schieber an dem Düsenbauteil vorliegen, das Auseinanderfahren der Werkzeughälften erfolgt.

Das Bewegen des Schiebers kann dabei ein Bewegen der Antriebsstange mittels des Motors umfassen, wobei Kämmen des zumindest einen gezahnten Abschnitts des Antriebsrings und Drehen des Antriebrings und dadurch Drehen der Drehscheibe erfolgt, wobei durch Zusammenwirken der Führungen des Führungselements in dem Gegenführungselement und des Laufrollenlagers in der Führungsnut des Drehrings von einer Ausgangsposition am Anfang der Nut in eine Endposition am Ende der Nut der Schieber in der Schienenführung linear von seiner Ausgangsposition in seine Endposition verfahren wird. Für die Rückbewegung in die Ausgangsposition wird entsprechend der Antriebsstange des Motors entgegengesetzt bewegt.

Wird der Antriebsring also angetrieben, dreht sich der Drehring mit. Die Schieber werden von der Führung an der Oberfläche des Formeinsatzes seitlich gehalten. Während sich der Drehring dreht, werden die Führungsbolzen entlang der Nut bewegt, ähnlich einer Stein-Kulissen-Führung. Die Dreh-Bewegung des Drehrings wird durch die Kombination der gekrümmten Nut in dem Drehring mit der geraden Nut in dem Formeinsatz auf die Schieber übertragen, so dass diese in der Schienenführung in einer linearen Bewegung vor- bzw. zurückgefahren werden können. So kann jedem Schieber eine eigene Bewegungslaufbahn vorgegeben werden. In einer bevorzugten Ausführungsform können vier Schieber je eine eigene Bewegungsrichtung erhalten. Dies ermöglicht zusätzlich, dass bei mehreren Schiebern jeder Schieber einen spezifischen Kurven-Verlauf erhält und dadurch zeitlich, streckenlängen- und richtungstechnisch unterschiedliche Bewegungen bei nur einem gemeinsamen Antrieb möglich sind.

Im Stand der Technik werden die Schieber einfach linear geführt und bspw. bei der Entformung nach außen bewegt. Erfindungsgemäß aber erfolgt eine Drehbewegung, die in eine lineare Bewegung umgesetzt wird. Das Lager der Bewegung liegt dabei zwischen der Drehbaugruppe und dem Formeinsatz, wodurch eine optimale Führung und Zentrierung zueinander und dadurch Kraftübertragung ermöglicht wird. Die Gestaltung des Werkzeugs wird durch die gemeinsame Bewegung mehrerer Schieber gleichzeitig und den Formbereich um die Mitte des Antriebsrings sehr kompakt.

Weitere Ausführungsformen des Werkzeugs sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- Fig. 1a: eine schematische Vorderansicht eines Auswerferbauteils zum Spritzgießen von Kunststoffteilen nach dem Stand der Technik;
- Fig. 1b: eine Vorderansicht des erfindungsgemäßen Auswerferbauteils im Vergleich dazu
- Fig. 2: eine perspektivische Ansicht des erfindungsgemäßen Auswerferbauteils in einer Spritzgussposition,
- Fig. 3a: eine Detailansicht A eines Formeinsatzes mit Schiebern nach Fig. 1b,
- Fig. 3b: eine Schnittansicht B-B durch einen Teil des Formeinsatzes nach Fig. 3a,
- Fig. 4: eine perspektivische Ansicht des Antriebsrings inklusive Drehring und Schieber,
- Fig. 5a: eine perspektivische Rückansicht des Auswerferbauteils mit Antriebsstrang,
- Fig. 5b: eine perspektivische Detailansicht der Verbindung Antriebsstange und Antriebsring,
- Fig. 6a: eine weitere Detailansicht A des Formeinsatzes mit Schiebern in einer Andeckel-Position,
- Fig. 6b: eine Schnittansicht C-C durch einen Teil des Formeinsatzes nach Fig. 6a,
- Fig. 7a: eine weitere Detailansicht A des Formeinsatzes mit Schiebern in einer DeckelPosition,
- Fig. 7b: eine Schnittansicht D-D durch einen Teil des Formeinsatze nach Fig. 7a,
- Fig. 8a: noch eine weitere Detailansicht des Formeinsatzes mit Schiebern in einer Auswurf-Position,
- Fig. 8b: eine Schnittansicht E-E durch einen Teil des Formeinsatze nach Fig. 8a,
- Fig. 9: eine Seitenansicht eines erfindungsgemäßen Werkzeugs in geöffnetem Zustand,
- Fig. 10: eine perspektivische Ansicht eines weiteren erfindungsgemäßen Auswerferbauteils mit Formschiebern,
- Fig. 11: eine Detailansicht F eines Formeinsatzes mit Schiebern nach Fig. 10 in einer Spritzposition,
- Fig. 12: eine weitere Detailansicht F des Formeinsatzes in einer zweiten Position,
- Fig. 13: noch eine weitere Detailansicht F des Formeinsatzes in einer Auswerf-Position;
- Fig. 14: teilgeschnittene Seitenansicht eines erfindungsgemäßen Werkzeugs; und
- Fig. 15: Detailansicht der Fig. 14.

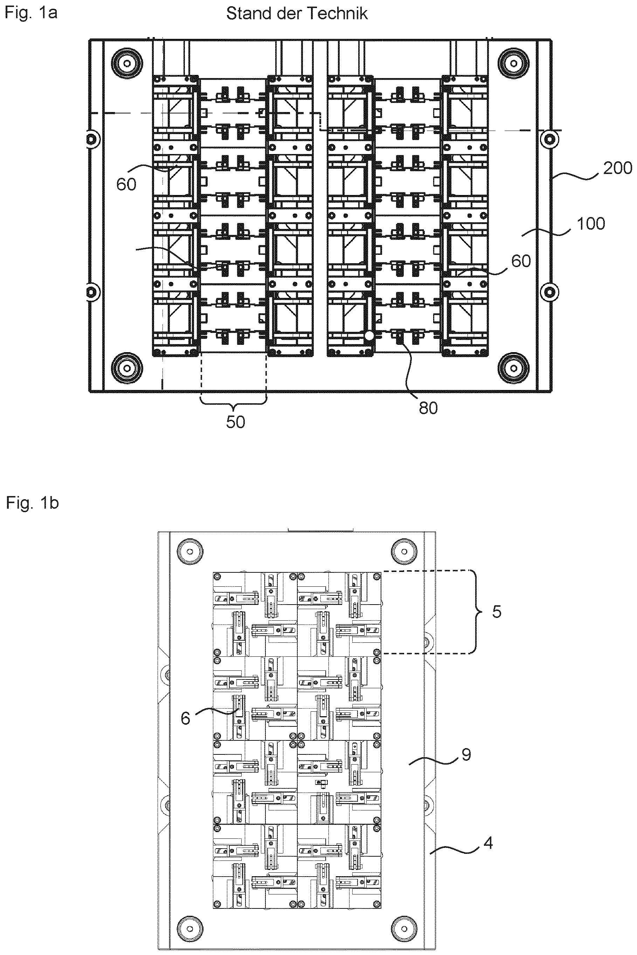

In Fig. 1a ist ein Auswerferbauteil 200 nach dem Stand der Technik dargestellt, das auf einer Formeinsatz-Trägerplatte 100 zwei Reihen Formeinsätze 50 mit Form-Kavitäten 80 und jeweils daneben angeordneten Schiebern 60 aufweist. Die Formkavitäten 80 liegen pro Bauteilhälfte in zwei parallel zueinander angeordneten Reihen vor. Die Schieber 60 sind jeweils links und rechts der Reihen angeordnet, so dass die Schieber 60 zum Verdeckeln des Formteils (in Kavität 80 vorliegend) von außen nach innen geführt werden. Es liegen acht Formeinsätze 50 mit jeweils vier Formteil-Kavitäten 80 vor, so dass 36 Formteile gleichzeitig geformt werden können.

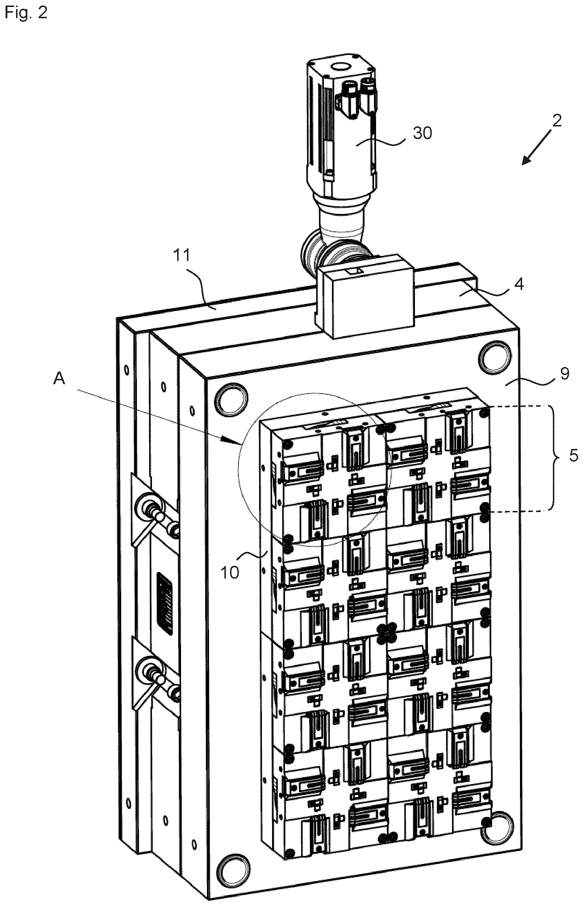

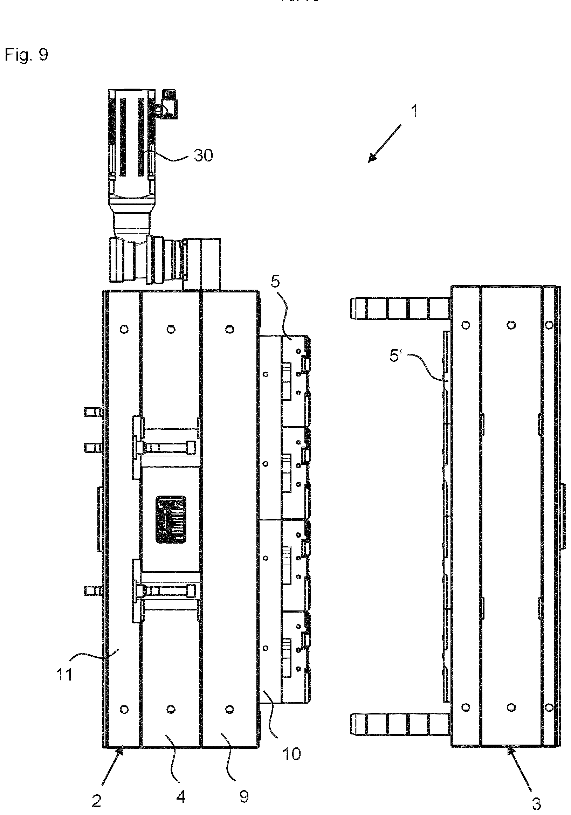

Fig. 1b und 2 zeigen ein erfindungsgemäßes Auswerferbauteil 2 mit acht Formeinsätzen 5, das im Vergleich zum Stand der Technik nach Fig. 1a etwa um die Hälfte schmaler gebaut ist. Das Auswerferbauteil 2 wirkt in einem Werkzeug 1 mit einem Düsenbauteil 3 zusammen, wie Fig. 9 zeigt. Wenn das Auswerferbauteil 2 mit einem Düsenbauteil 3 in einen geschlossenen Zustand gebracht wird, wird aus den Formkavitäten 8 in den Formeinsätzen 5 des Auswerferbauteils 2 und den komplementären Kavitäten in den Komplementäreinsätzen 5' des Düsenbauteils 3 eine komplette Formkavität zum Spritzgießen der Kunststoffteile gebildet. Das Düsenbauteil 3 kann von dem Auswerferbauteil 2 hin und wieder weggefahren werden oder umgekehrt. In den nachfolgend im Zusammenhang mit den Figuren beschriebenen Beispielen eines erfindungsgemäßen Werkzeugs liegen die Formeinsätze mit den Schiebern und deren Antrieb an dem Auswerferbauteil vor, was insbesondere in der Variante mit Deckelungsschieber eine bevorzugte Ausführung darstellt. Obwohl figurativ nicht dargestellt, umfasst der beanspruchte Schutzumfang aber auch Ausführungen eines Werkzeugs, bei dem die Formeinsätze bzw. Komplementäreinsätze des Düsenbauteils die Schieber mitsamt Antrieb aufweisen, die dann den komplementären Kavitäten zugeordnet sind.

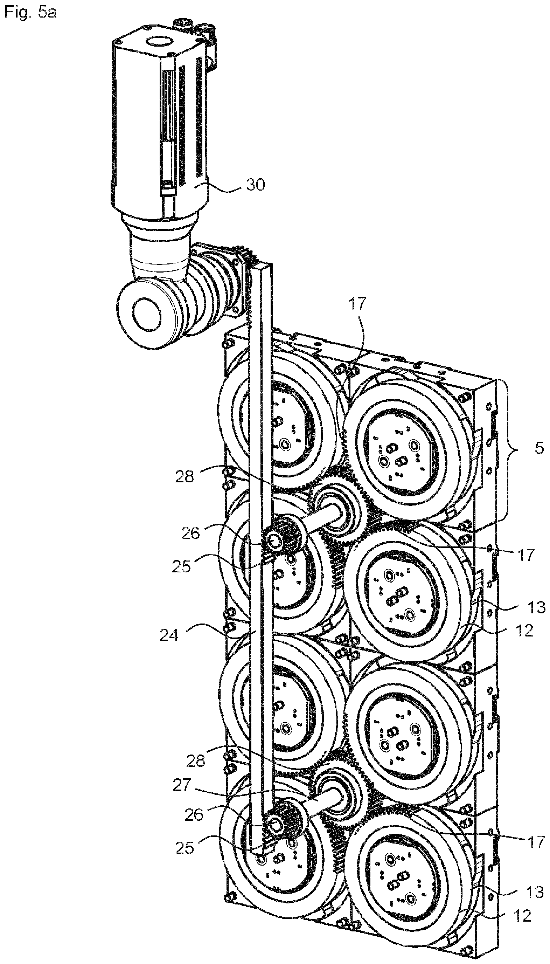

Das Auswerferbauteil 2 weist eine Rahmenplatte 4 auf, mit der eine Formplatte 9 verbunden ist, die eine Einsatzträgerplatte 10 hält, auf der die Formeinsätze 5 befestigt sind. Die Einsatzträgerplatte 10 haust die Antriebsringe 12 für Schieber 6 und Formeinsätze 5, wobei weitere zum Motor 30 führende Antriebskomponenten wie die Antriebsstange 24 (vgl. Fig. 5a) in der Formplatte 9 hausen. Gegebenenfalls können die Antriebskomponenten aber auch in der Rahmenplatte 4 hausen. Die Einsatzträgerplatte 10 ist eine für die einfachere Handhabung geschaffene Platte. Anders als in den dargestellten Beispielen kann auf eine Einsatzträgerplatte verzichtet und der gesamte Antrieb (Antriebsringe und Antriebskomponenten) in eine Formplatte bzw. Rahmenplatte integriert werden. Die Formeinsätze 5 weisen neben den Schiebern 6 dazu zugeordnete Formteil-Kavitäten 8 (kurz Kavitäten) auf. Die Rahmenplatte 4 befindet sich auf der den Form-Kavitäten 8 abgewandten Seite des Auswerferbauteils 2 und ist mit einer rückseitigen Formplatte 11 verbunden, die das Auswerferbauteil 2 hält bzw. es in geeigneter Weise an einer Halterung befestigt. Oberhalb der Rahmenplatte 4 ist ein Motor 30 angeordnet.

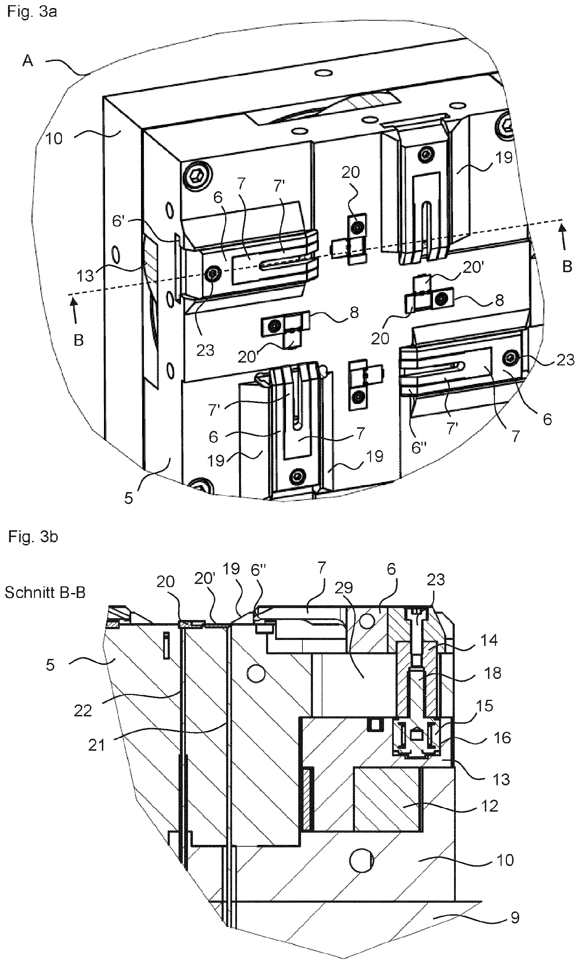

Die Formeinsätze 5 weisen, wie u. a. Fig. 3a (Detail A aus Fig. 2) und 3b (Schnitt B-B aus Fig. 2) darstellen, die jeweils vier Schieber 6 zum Deckeln von Kunststoffbauteilen auf. Es sind pro Formeinsatz 5 im zentralen Bereich auf gedachten Kreuzlinien vier FormKavitäten 8 angeordnet, die den Formbereich bilden. Jeder Form-Kavität 8 ist ein Schieber 6 zugeordnet, so dass sie ein Paar bilden.

Die auf jedem Formeinsatz 5 angeordneten Schieber 6 sind über die kavitätenseitige Oberfläche des Formeinsatzes 5 bewegbar angeordnet und sind gabelförmig. Jeder Schieber 6 weist eine Schiebergabel 7 mit Schiebergabelzinken 7' auf. Ferner hat jeder Schieber 6 zu jeder Längsseite ein Führungselement 6', das in einer Schienenführung 19 seitlich geführt ist. Die Schienenführung 19 stellt das Gegenführungselement dar und ist als Nut, in die das Führungselement 6' eingreift, mit im Querschnitt dreieckig geformt Seiten ausgebildet. Die Schienenführung 19 nimmt dabei die Bewegungskräfte des Schiebers 6 während der Bewegung auf und ermöglicht eine lineare Führung des Schiebers 6.

Der Schieber 6 ist zur Form-Kavität 8 gewandt nach vorne zu seiner Basis hin abgeflacht und bildet eine Schieber-Spitze 6", die endseitig vorne abgerundet ist, um die Formteile 20 nicht zu beschädigen. Die Schieber 6 sind auf dem Formeinsatz 5 derart angeordnet, dass jede Spitze 6" einer Schieberseite im rechten Winkel zugewandt ist, so dass sich bei vier Schiebern 6 eine Anordnung auf Kreistangenten oder Kreissehnen, z. B. im Viereck ergibt. Die Spitzen 6" sind dabei stets den Kavitäten 8 zugewandt und senkrecht dazu ausgerichtet. Die Schieber 6 und die Kavitäten 8 sind äquidistant zueinander in dem Formeinsatz 5 angeordnet. Die Anordnung ergibt sich ferner aus einem spezifischen Bezug zu einem Antriebsbauteil (siehe unten).

Innerhalb des Formeinsatzes 5 sind Auswerferpins 21, 22 unterhalb der Kavitäten 8 angeordnet, die aus dem Formeinsatz 5 heraus senkrecht zur kavitätenseitigen Oberfläche des Formeinsatzes 5 herausgefahren werden können, um das fertige Formteil 20 aus den Kavitäten 8 zu lösen und schlussendlich auszuwerfen.

Um den Schieber 6 bewegen zu können, ist eine Betätigungsvorrichtung vorgesehen, wie in den Fig. 3b, 4, 5a und 5b dargestellt ist.

Jeder Schieber 6 ist mit einem Verbindungsbolzen 14 über eine Verschraubung 23 verbunden. Der Verbindungsbolzen 14 ist ferner über die Verschraubung 23 mit einem Dorn 18 verschraubt, der sich nach unten in den Formeinsatz 5 erstreckt. Der Dorn 18 und somit der Verbindungsbolzen 14 mündet in ein Laufrollenlager 15.

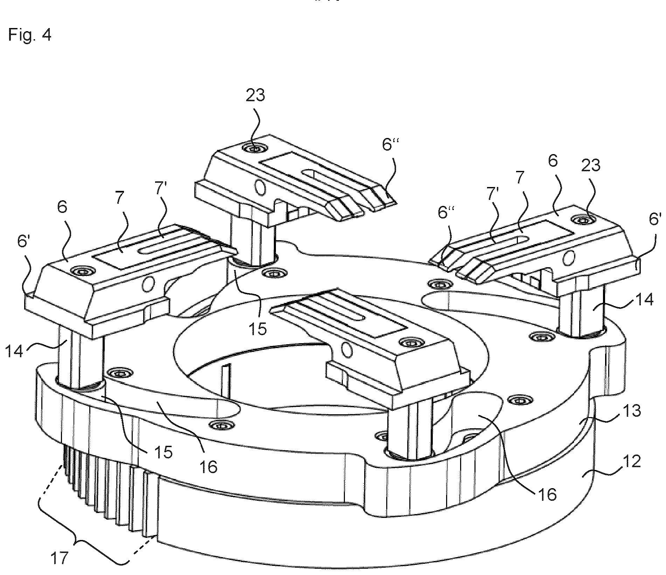

Die Betätigungsvorrichtung weist einen Antriebsring 12 auf, der zumindest einen gezahnten Abschnitt 17 aufweist, wie Fig. 4 zeigt. Mit dem Antriebsring 12 fest verbunden ist ein Drehring 13, der vier Nuten 16 aufweist, in denen jeweils ein Laufrollenlager 15 der Schieber 6 beweglich gelagert ist. Die Nuten 16 sind bogenförmig nach innen gekrümmt. Der Krümmungsradius entspricht dem Radius des Drehrings 13, aber ist versetzt angeordnet, so dass eine Bewegung des Drehrings 13 ein Führen des Verbindungsbolzens 14 in Richtung der Mitte des Drehrings hin zur Folge hat. Die Bewegung wird begrenzt durch die Länge der Nut 16.

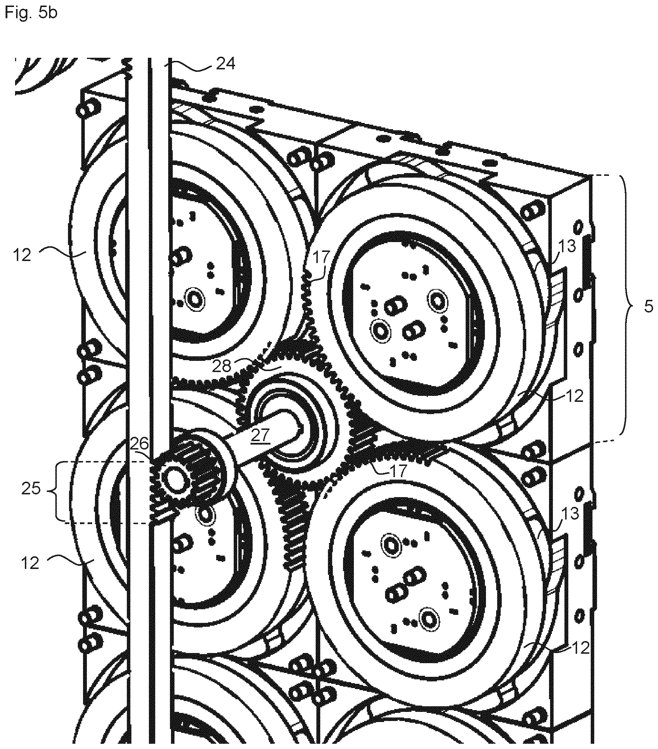

Der gezahnte Abschnitt 17 des Antriebsrings 12 steht mit dem rückwärtig der Formeinsatz-Trägerplatte 10 angeordneten Antrieb in Eingriff (siehe Fig. 5a und 5b). Dazu kann hinter den Formeinsätzen 5 eine zentral oder mittig geführte Antriebsstange 24 vorgesehen sein, die mit dem Motor 30 operativ gekoppelt ist. Die Antriebsstange 24 ist zur Krafteinleitung von dem Motor 30 zu einer Drehmoment-Einleitung auf weitere Bauteile in einzelnen Abschnitten 25 verzahnt. Die Drehmomenteinleitung von Antriebsstange 24 zu Antriebsring 12 erfolgt über eine Welle 27, die zwei Zahnräder 26, 28 an ihren Enden aufweist. Ein erstes Zahnrad 26 übernimmt die Bewegung der Antriebsstange 24 und überträgt sie auf ein zweites Zahnrad 28, das die Bewegung dann auf die Verzahnungsabschnitte 17 von insgesamt vier Antriebsringen 12 überträgt (siehe Fig. 5a und 5b).

Dadurch, dass der Antriebsring 12 mit dem Drehring 13 fest verbunden ist, werden beide gemeinsam angetrieben. Beim Drehen des Antriebsrings 12 wird die Bewegung des Drehrings 13 auf den Verbindungsbolzen 14, der mit seinem Laufrollenlager 15 in der Nut 16 des Drehrings 13 gelagert ist, geführt. Die mit dem Verbindungbolzen 14 verbundenen Schieber 6 sind in ihrer Bewegung mittels der Führungselemente 6' entlang der Schienenführung 19 geführt. Dreht sich also der Drehring 13 wird die Dreh-Bewegung durch die Kombination der gekrümmten Nut 16 in dem Drehring 13 mit der geraden Nut 29 in dem Formeinsatz 5 auf die Schieber 6 übertragen, so dass die Schieber 6 in der Schiene 19 vor- bzw. zurückgefahren werden.

Der Bewegungsablauf und die anschließende Deckelung des Formteils 20 verläuft wie folgt: In den Fig. 3a und 3b ist eine Position kurz nach dem Spritzen der Formteile 20 dargestellt, Schieber 6 sind in einer Ausgangsposition und die Auswerferpins 21, 22 sind eingefahren. Das Formteil 20 liegt bereits vor und das Auswerferbauteil 2 ist von dem entsprechenden Düsenbauteil 3 weggefahren.

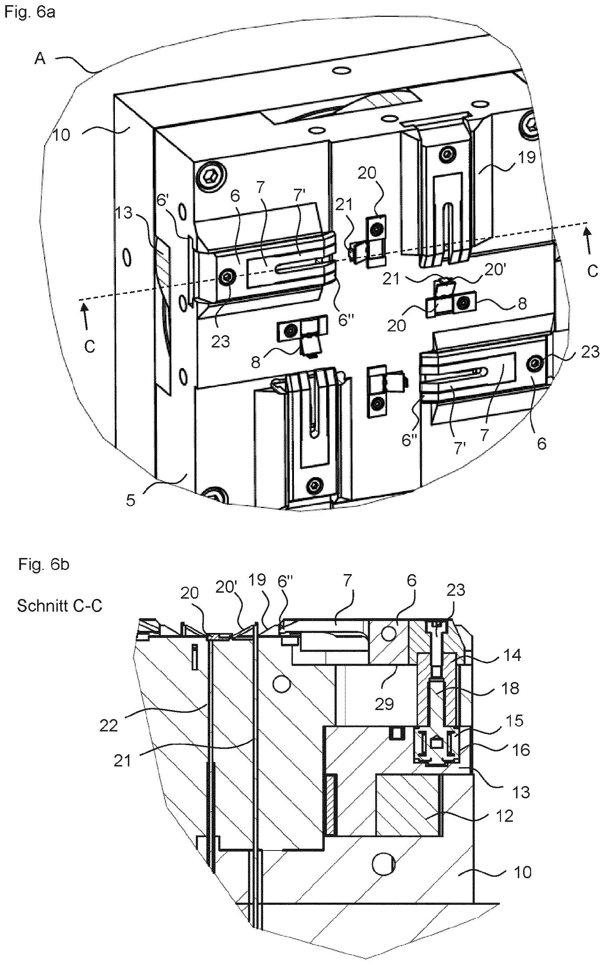

Fig. 6a und 6b zeigen eine Andeckel-Position, wobei der Auswerfer 21 ausgefahren wird, um einen zweiten Abschnitt 20' (auch Deckel 20') des Formteils 20 anzuheben. Die Schieber 6 befinden sich noch in ihrer Ausgangsposition.

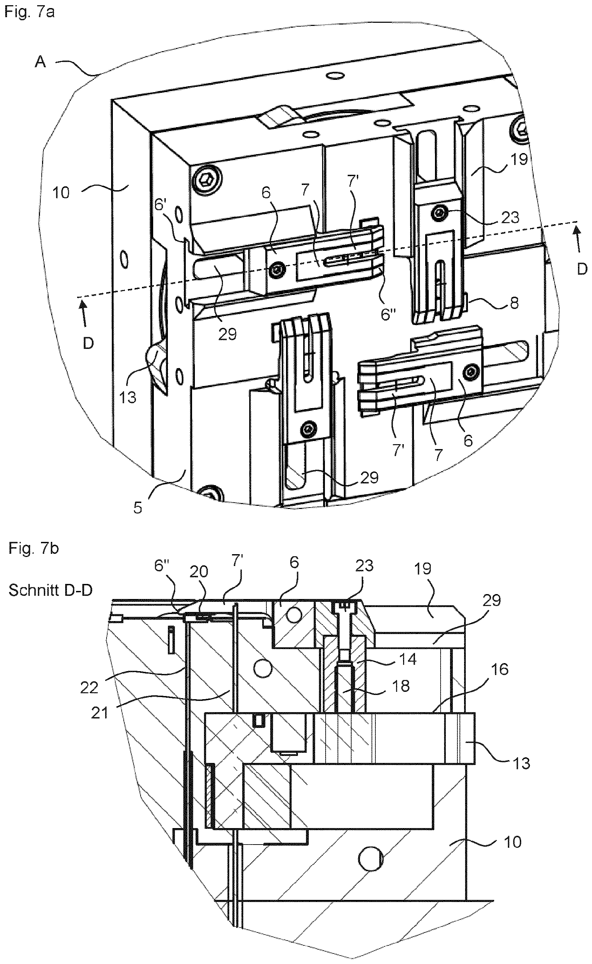

Um den Deckelabschnitt 20' auf das Formteil 20 zu legen, wird der Motor 30 gestartet, der die Antriebsstange 24 antreibt, deren gezahnte Abschnitte 25 mit dem Zahnrad 26 zusammenwirken. Über die in Zusammenhang mit Fig. 5a und 5b beschriebene Bewegungsübertragung wird der Antriebsring 12 und damit der Drehring 13 in Bewegung versetzt. Das Laufrollenlager 15 bewegt sich in der Nut 16 und der Verbindungsbolzen 14 wird in den Nuten 16 des Drehrings 13 und den Nuten 29 des Formeinsatzes 5 gleichzeitig bewegt. Mittels der Schienenführung 19 und der Führungselemente 6' wird der Schieber 6 linear nach vorne bewegt. Der stiftförmige Auswerfer 21 passt in die Schiebergabel 7, so dass die Gabelzinken 7' an dem Auswerfer 21 vorbeigleiten und ihn damit umfahren. Die abgerundete Spitze 6" des Schiebers 6 fährt unter den zweiten Abschnitt 20' des Formteils und dieser gleitet in der Vorwärtsbewegung des Schiebers 6 an der Spitze 6" entlang und wird in dieser Bewegung mitgenommen. Der Verbindungsbolzen 14 bewegt sich dabei bis ans Ende der Nut 16, so dass der Schieber 6 bis ganz vor zu einer Endposition fährt, wie in Fig. 7a und 7b dargestellt ist. Der Schieber 6 klappt dabei durch Überfahren des zweiten Abschnitts 20' des Formteils 20 denselben auf einen ersten Abschnitt des Formteils 20, so dass beide aufeinander zu liegen kommen.

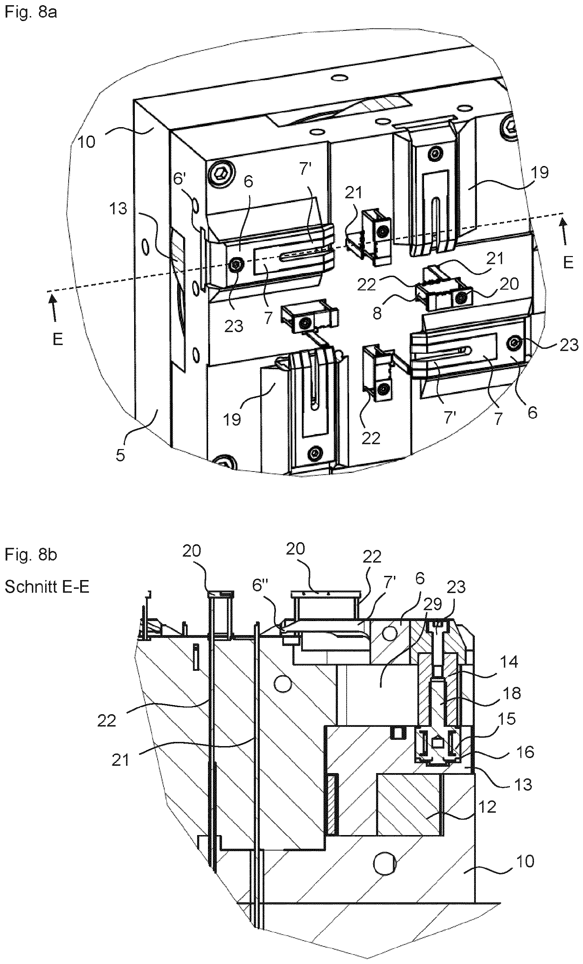

Das fertige Formteil 20 wird schlussendlich ausgeworfen (Fig. 8a und 8b), wozu der Schieber 6 durch umgekehrte Bewegung mittels des Antriebsrings 12 wieder in seine Ausgangsposition bewegt wird. Ist das Formteil 20 nicht mehr durch den Schieber 6 bedeckt, fahren die Auswerfer 22 von unten an das Formteil 20 heran und drücken es aus der Kavität 8 heraus. Danach ist das Formteil 20 freigegeben und wird ausgeworfen. Die Auswerfer 21, 22 fahren in ihre Ausgangspositionen zurück und ein neues Formteil 20 kann gefertigt werden.

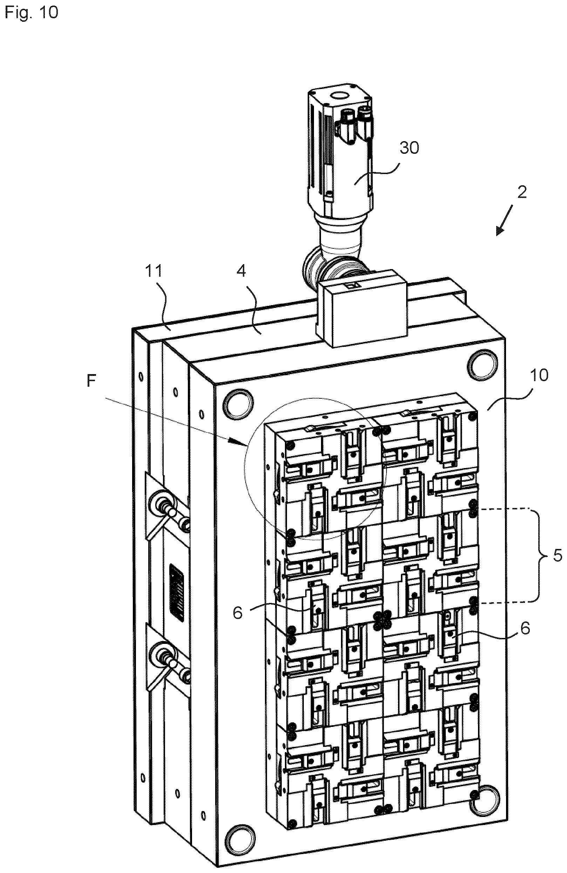

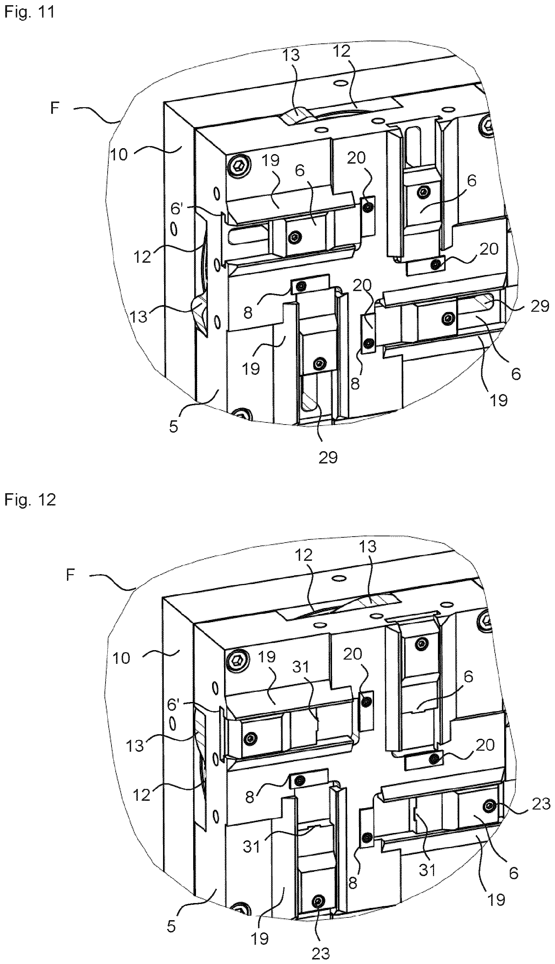

In Fig. 10 ist ein weiteres Auswerferbauteil 2 dargestellt, das dem Aufbau des bereits beschriebenen gleicht, aber veränderte Formeinsätze 5 aufweist. Es sind wiederum acht Formeinsätze 5 vorgesehen, die jeweils vier Schieber 6 tragen. Die weiteren Fig. 11 bis 13 zeigen ein Detail F aus Fig. 10, eine nähere Ansicht eines Formeinsatzes 5 in verschiedenen Positionen.

Fig. 11 zeigt den Formeinsatz 5 in Spritzgussposition, der Schieber 6 ist bis an seine Endposition vorgeschoben und ist direkt neben der Kavität 8, die das Formteil 20 ausformt, angeordnet. Dabei ragt ein Abschnitt 31 (siehe Fig. 12) in Form einer Auskragung in die Kavität 8 hinein und bildet zusätzlich ein formgebendes Teil für das Formteil 20. Die Nut 29 des Formeinsatzes 5 liegt frei und der Drehring 13 ist ebenfalls in Anschlagsposition.

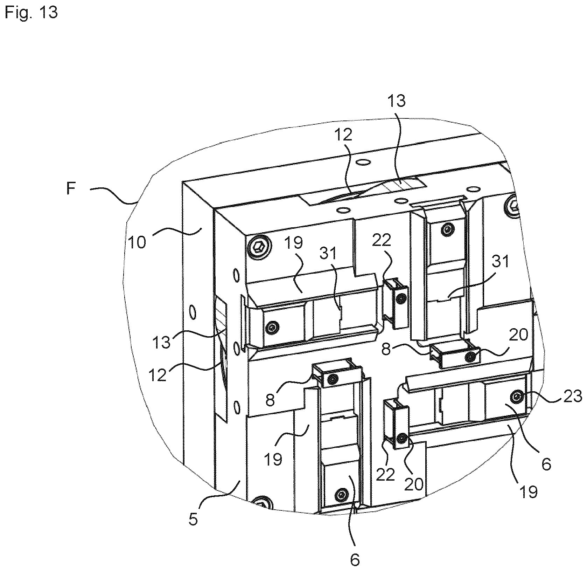

Der Schieber 6 wird dann in Bewegung versetzt und wird linear in eine erste Position (Ausgangsposition) verfahren, um das Auswerfen des Formteils 20 zu ermöglichen. Fig. 12 und Fig. 13 stellen den Schieber 6 in Auswurf-Position dar, wobei er in der Nut 29 im Bild ganz nach links verschoben ist, wobei der Drehring 13 in der Gegen-Anschlagsposition sich befindet. In Fig. 13, das den tatsächlichen Auswurfschritt zeigt, sind die Auswerferpins 22 aus der kavitätenseitigen Oberfläche des Formeinsatzes 5 herausgefahren und drücken so das Formteil 20 aus der Kavität 8.

Durch den Drehring 13 wird somit eine Rotationsbewegung des Antriebsrings in eine Linearbewegung der Mehrzahl an Schiebern 6 umgesetzt.

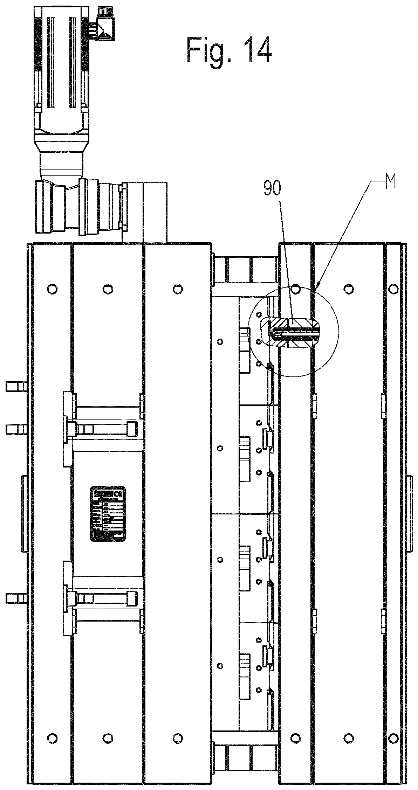

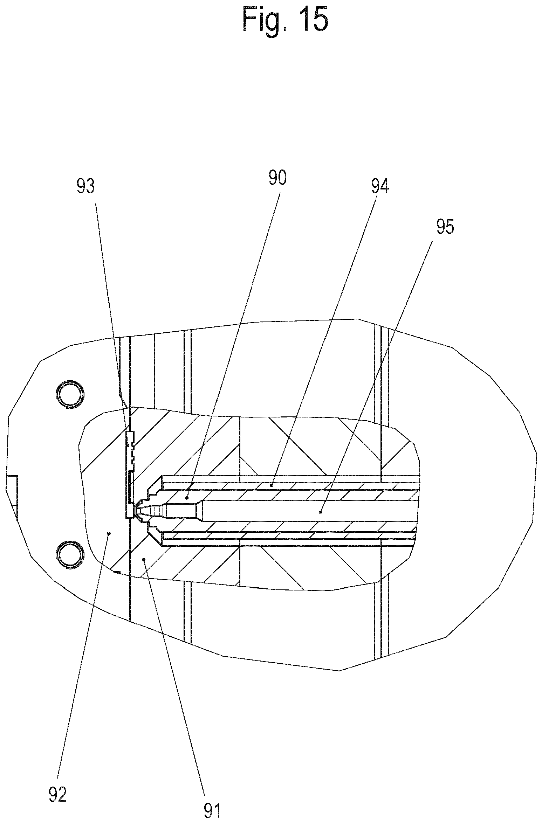

Fig. 14 und Fig. 15 zeigt eine Seitenansicht eines erfindungsgemäßen Werkzeugs in Analogie zur den vorangegangenen Figuren, mit der Ergänzung einer beheizten Düse 90 zur Ausgabe einer thermoplastischen Kunststoffmasse im Rahmen eines Spritzgießvorgangs in eine Kavität unter Ausbildung eines sogenannten Spritzlings bzw. eines Formteils, analog zum Formteil 20.

In Fig. 15 ist der Werkzeugausschnitt M mit der Düse 90 der Fig. 14 vergrößert dargestellt. Auf der düsenseitigen Werkzeughälfte ist ein erster Formeinsatz 91 angeordnet und auf der auswerferseitigen Werkzeughälfte des Werkzeugs ist ein zweiter Formeinsatz 92 angeordnet.

Die Formeinsätze 91 und 92 bilden um zusammengefahrenen Zustand des Werkezeugs die Kavität 93 aus, welche vorzugsweise analog zur Formteilkavität 8 der Fig. 1-13 ausgebildet sein kann. Das Kunststoffmaterial wird durch die beheizte Düse 90, insbesondere durch einen Schmelzekanal 95, als Teil der Düse 90, in die Kavität 93 eingeleitet. Hierfür ist eine gegenüber dem Schmelzekanal 95 außenseitige Düsenheizung 94 in der Düse 90 vorgesehen.

Werkzeuge mit entsprechenden Düsen sind im Bereich des Spritzgusses an sich bekannt. Insbesondere im Spritzguss wird besonderer Fokus auf möglichst kurze Zykluszeiten gelegt, wobei eine Vielzahl der erreichten Vorteile bei der Fertigung von Formteilen im Rahmen der vorliegenden Erfindung u.a. in der Zeitersparnis, der Automatisierung von Arbeitsabläufen und der geringen Fertigungsfehlerquote liegen.

### BEZUGSZEICHENLISTE

- 1: Werkzeug
- 2: Auswerferbauteil
- 3: Düsenbauteil
- 4: Rahmenplatte
- 5: Formeinsatz
- 5': Komplementäreinsatz
- 6: Schieber
- 6': Führungselement
- 6": Schieber-Spitze
- 7: Schiebergabel
- 7': Schieberzinken
- 8: Formteil-Kavität
- 9: Formplatte
- 10: Einsatzträgerplatte
- 11: rückseitige Formplatte
- 12: Antriebsring
- 13: Drehring
- 14: Verbindungsbolzen
- 15: Laufrollenlager
- 16: Nut Drehring
- 17: Verzahnungsabschnitt
- 18: Dorn
- 19: Gegenführungselement Schiene/Schienenführung
- 20: Formteil
- 20': Formteil-Deckel
- 21: Auswerfer Deckel
- 22: Auswerfer Formteil
- 23: Verschraubung Verbindungsbolzen
- 24: Antriebsstange
- 25: Verzahnungsabschnitt Antriebsstange
- 26: Zahnrad Antriebsstange
- 27: Welle
- 28: Zahnrad Antriebsring
- 29: Nut Formeinsatz
- 30: Motor
- 31: Abschnitt/Auskragung
- 50: Formeinsatz
- 60: Schieber
- 80: Formteil-Kavität
- 100: Formeinsatz-Trägerplatte
- 200: Auswerferbauteil

## Patentansprüche

1. Werkzeug (1) zum Spritzgießen von Kunststoff-Formteilen, mit zwei Werkzeughälften (2, 3), nämlich einem Düsenbauteil (3) und einem Auswerferbauteil (2), die zueinander verfahrbar sind,
wobei eine erste der beiden Werkzeughälften (2, 3)
- eine Formplatte (9) aufweist, die zumindest einen Formeinsatz (5) mit einer Vielzahl Form-Kavitäten (8) trägt, oder
- eine Formplatte (9) mit einer Formeinsatzträgerplatte (10) aufweist, die zumindest einen Formeinsatz (5) mit einer Vielzahl Form-Kavitäten (8) trägt,
wobei die Form-Kavitäten (8) der ersten der beiden Werkzeughälften (2, 3) dazu ausgebildet sind, mit an der zweiten der beiden Werkzeughälften (2, 3) vorliegenden komplementären Kavitäten Formteile (20) zu bilden,
wobei der Formeinsatz (5) jeder Form-Kavität (8) zugeordnet einen Schieber (6) aufweist, der jeweils über oder in einer kavitätenseitigen Oberfläche des Formeinsatzes (5) zwischen zwei Positionen bewegbar angeordnet ist,
**dadurch gekennzeichnet, dass**
der Schieber (6) zumindest ein Führungselement (6') aufweist, das mit einem Gegenführungselement (19) in dem Formeinsatz (5) in Eingriff steht,
wobei sich von dem Schieber (6) in Richtung der Formplatte (9) oder der Formeinsatzträgerplatte (10) ein Verbindungsbolzen (14) erstreckt, der in einer Führungsnut (16) eines Drehrings (13) geführt wird, wobei eine Mehrzahl der Verbindungsbolzen (14) mehrerer Schieber (6) umfänglich in einer entsprechenden Anzahl von Führungsnuten (16) verteilt entlang dem Umfang des Drehrings (13) angeordnet ist, und wobei der Drehring (13) mit einem auf der Formplatte (9) oder der Formeinsatzträgerplatte (10) angeordneten Antriebsring (12) verbunden ist.

2. Werkzeug (1) nach Anspruch 1,
**dadurch gekennzeichnet, dass**
die erste der beiden Werkzeughälften (2, 3) das Auswerferbauteil (2) ist, und die zweite der beiden Werkzeughälften (2, 3) das Düsenbauteil (3) ist, wobei das Düsenbauteil (3) vorzugsweise eine beheizbare Düse umfasst.

3. Werkzeug (1) nach Anspruch 1 oder 2, wobei die Formteile (20) einteilige Formteile (20) sind,
**dadurch gekennzeichnet, dass**
- der Schieber (6) dazu ausgebildet ist, das einteilige Formteil (20) zu bewegen,
oder
- das einteilige Formteil (20) zumindest zwei Abschnitte aufweist und zumindest ein Abschnitt über ein Scharnier mit einem zweiten Abschnitt (20') verbunden ist, wobei der Schieber (6) dazu ausgebildet ist, den mit dem Scharnier verbundenen zweiten Abschnitt (20') zu schwenken,
oder
- der Schieber (6) mit einem Abschnitt (31) ausgebildet ist, der während des Spritzgießens in die Kavität (8) ragt.

4. Werkzeug nach zumindest einem der Ansprüche 1 bis 3, **dadurch gekennzeichnet, dass**
der Antriebsring (12) mit einem Motor (30) operativ gekoppelt ist,
wobei der Antriebsring (12) zumindest einen gezahnten Abschnitt (17) aufweist, der mit einer Antriebsstange (24) des Motors (30) kämmt.

5. Werkzeug nach einem der Ansprüche 1 bis 4, **dadurch gekennzeichnet, dass** die Vielzahl von Kavitäten (8) eine Oberseite definieren und dass ein Antrieb umfassend zumindest den Antriebsring (12) in senkrechter Richtung unterhalb der Kavitäten (8) angeordnet ist, wobei der Drehring (13) eine Rotationsbewegung des Antriebsrings (12) in eine Linearbewegung der Schieber (6) umsetzt.

6. Werkzeug nach zumindest einem der Ansprüche 1 bis 5, **dadurch gekennzeichnet, dass**
der Verbindungsbolzen (14) ein Laufrollenlager (15) aufweist, das in der Führungsnut (16) des Drehrings (13) geführt wird, und/oder
jeder Schieber (6) an dem von dem in der Führungsnut (14) geführten Ende abgewandten Ende des Verbindungsbolzens (14) ein sich horizontal wegerstreckendes Schiebeteil mit einer Schieberspitze (6"), bevorzugt einer Schieberspitze (6") mit einer Schiebergabel (7) mit Schieberzinken (7'), aufweist.

7. Werkzeug nach zumindest einem der Ansprüche 1 bis 6,
**dadurch gekennzeichnet, dass**
der Schieber (6) in einer Schienenführung (6') linear beweglich gelagert ist und der Formeinsatz (5) Nuten (29) aufweist, die in ihrer Ausrichtung der Schienenführung (6') entsprechen, wobei die Verbindungsbolzen (14) der Schieber (6) in diesen Nuten (29) geführt sind.

8. Werkzeug nach zumindest einem der Ansprüche 1 bis 7,
**dadurch gekennzeichnet, dass**
die Mehrzahl der Verbindungsbolzen (14) mehrerer Schieber (6) umfänglich in der entsprechenden Anzahl der Führungsnuten (16) äquidistant voneinander entlang dem Umfang des Drehrings (13) angeordnet sind, wobei das Führungselement (6') und das Gegenführungselement (19) eine Schienenführung (19) bilden.

9. Werkzeug nach zumindest einem der Ansprüche 2 bis 8,
**dadurch gekennzeichnet, dass**
das Auswerferbauteil (2) Auswerferpins (21, 22) aufweist, die, nachdem das Formteil (20) gegossen wurde, aus der kavitätenseitigen Oberfläche des Formeinsatzes (5) herausfahrbar sind, wobei der Schieber (6) derart ausgebildet ist, dass die Auswerferpins (21, 22) in einem Auswerfzustand umfahrbar sind.

10. Werkzeug nach Anspruch 9,
**dadurch gekennzeichnet, dass**
die Schiebergabel (7) so angeordnet ist, dass die Schieberzinken (7') die Auswerferpins (21, 22) in dem Auswerfzustand umfahren.

11. Verfahren zum Bewegen eines Schiebers (6) der ersten der beiden Werkzeughälften (2, 3) eines Werkzeugs (1) nach zumindest einem der Ansprüche 1 bis 10, wobei der auf der Formplatte (9) oder Formeinsatzträgerplatte (10) angeordnete Antriebsring (12) zusammen mit dem verbundenen Drehring (13) gedreht wird, und wobei der Verbindungsbolzen (14), der mit dem Schieber (6) verbunden ist, in der Führungsnut (16) des Drehrings (13) geführt wird und der Schieber (6) mittels des in dem Gegenführungselement (19) geführten Führungselements (6') von einer Ausgangsposition in eine Endposition verfahren wird.

12. Verfahren zum Schwenken eines Abschnitts eines in einem Auswerferbauteil (2) vorliegenden einteiligen Formteils (20), wobei der Abschnitt ein zweiter Abschnitt (20') ist, der über ein Scharnier mit einem ersten Abschnitt verbunden ist, **umfassend die Schritte**
a) Ausfahren des Auswerferpins (21), der unter dem zweiten Abschnitt (20') angeordnet ist und dadurch Lösen des zweiten Abschnitts (20') aus der FormteilKavität (8);
b) Bewegen des Schiebers (6) aus seiner Ausgangsposition durch das Verfahren nach Anspruch 11; wobei
die Schieberspitze (6") unter den zweiten Abschnitt (20') des Formteils (20) fährt und diesen aufrichtet, und
während des kontinuierlichen Weiterbewegens des Schiebers (6) in die Endposition die Schieberzinken (7') den Auswerferpin (21) umfahren und die Schieberspitze (6") den zweiten Abschnitt (20') des Formteils (20) umklappt und die Schieberzinken (7') über den zweiten Abschnitt (20') des Formteils (20) fahren, so dass der zweite Abschnitt (20') des Formteils (20) auf dem ersten Abschnitt des Formteils (20) zu liegen kommt,
c) Zurückbewegen des Schiebers (6) in seine Ausgangsposition durch Drehen des Antriebsrings (12) in zu Schritt b) entgegengesetzter Richtung, bevor das Auswerfen des Formteils (20) durch Ausfahren der Auswerferpins (22) erfolgt, die unter dem ersten Abschnitt des Formteils (20) vorliegen und dadurch das Formteil (20) aus der Formteil-Kavität (8) lösen.

13. Verfahren zum Gestalten der Form-Kavität (8) in einer Werkzeughälfte (2, 3) während des Spritzgießens durch Anordnen eines formgestaltenden Abschnitts eines Schiebers (6) in der Kavität (8), wobei das Anordnen des Schiebers (6) durch ein Verfahren nach Anspruch 11 erfolgt, und wobei der Schieber (6) nach dem Spitzgießen in seine Ausgangsposition durch Drehen des Antriebsrings (12) in zum Anordnen des Schiebers in der Kavität entgegengesetzter Richtung zurückbewegt wird, bevor das Auswerfen des Formteils (20) erfolgt.

## Claims

1. A tool (1) for the injection molding of plastic molded parts, with two tool halves (2, 3), namely a nozzle component (3) and an ejector component (2), which are movable in relation to each other,
wherein a first of the two tool halves (2, 3) has
- a mold plate (9), which carries at least one mold insert (5) with a multiplicity of mold cavities (8), or
- a mold plate (9) with a mold insert support platen (10), which carries at least one mold insert (5) with a multiplicity of mold cavities (8),
wherein the mold cavities (8) of the first of the two tool halves (2, 3) are designed to form molded parts (20) in conjunction with complementary cavities present on the second of the two tool halves (2, 3),
wherein the mold insert (5) of each mold cavity (8) is assigned a slide (6), which is in each case arranged movably between two positions over or in a cavity-side surface of the mold insert (5),
**characterized in that** the slide (6) has at least one guide element (6'), which is in engagement with a counterpart guide element (19) in the mold insert (5), wherein a connection bolt (14) extends from the slide (6) in the direction of the mold plate (9) or of the mold insert support platen (10) and is guided in a guide groove (16) of a rotary ring (13), wherein a plurality of connection bolts (14) of a plurality of slides (6) are arranged circumferentially along the circumference of the rotary ring (13), distributed in a corresponding number of guide grooves (16), and wherein the rotary ring (13) is connected to a drive ring (12) arranged on the mold plate (9) or the mold insert support platen (10).

2. The tool (1) as claimed in claim 1,
**characterized in that**
the first of the two tool halves (2, 3) is the ejector component (2), and the second of the two tool halves (2, 3) is the nozzle component (3), wherein the nozzle component (3) preferably comprises a heatable nozzle.

3. The tool (1) as claimed in claim 1 or 2, the molded parts (20) being one-piece molded parts (20),
**characterized in that**
- the slide (6) is designed to move the one-piece molded part (20), or
- the one-piece molded part (20) has at least two portions, and at least one portion is connected by a hinge to a second portion (20'), wherein the slide (6) is designed to pivot the second portion (20') connected to the hinge, or
- the slide (6) is designed with a portion (31) which projects into the cavity (8) during the injection molding.

4. The tool as claimed in at least one of claims 1 to 3,
**characterized in that**
the drive ring (12) is operatively coupled to a motor (30),
wherein the drive ring (12) has at least one toothed portion (17), which meshes with a drive rod (24) of the motor (30).

5. The tool as claimed in one of claims 1 to 4, **characterized in that** the multiplicity of cavities (8) define a top side, and **in that** a drive comprising at least the drive ring (12) is arranged perpendicularly underneath the cavities (8), wherein the rotary ring (13) converts a rotation movement of the drive ring (12) into a linear movement of the slides (6).

6. The tool as claimed in at least one of claims 1 to 5,
**characterized in that**
the connection bolt (14) has a roller bearing (15), which is guided in the guide groove (16) of the rotary ring (13), and/or
each slide (6), at the end of the connection bolt (14) directed away from the end guided in the guide groove (16), has a horizontally extending slide part with a slide tip (6"), preferably a slide tip (6") having a slide fork (7) with slide tines (7').

7. The tool as claimed in at least one of claims 1 to 6,
**characterized in that**
the slide (6) is mounted linearly movably in a rail guide (6'), and the mold insert (5) has grooves (29) which correspond in their orientation to the rail guide (6'), wherein the connection bolts (14) of the slides (6) are guided in these grooves (29).

8. The tool as claimed in at least one of claims 1 to 7,
**characterized in that**
the plurality of connection bolts (14) of a plurality of slides (6) are arranged at equal distances circumferentially along the circumference of the rotary ring (13), distributed in a corresponding number of guide grooves (16), wherein the guide element (6') and the counterpart guide element (19) form a rail guide (19).

9. The tool as claimed in at least one of claims 2 to 8,
**characterized in that**
the ejector component (2) has ejector pins (21, 22) which, after the molded part (20) has been cast, can be driven out from the cavity-side surface of the mold insert (5), wherein the slide (6) is designed in such a way that it can travel around the ejector pins (21, 22) in an ejection state.

10. The tool as claimed in claim 9,
**characterized in that**
the slide fork (7) is arranged such that the slide tines (7') travel around the ejector pins (21, 22) in the ejection state.

11. A method for moving a slide (6) of the first of the two tool halves (2, 3) of a tool (1) as claimed in at least one of claims 1 through 10, wherein the drive ring (12) arranged on the mold plate (9) or mold insert support platen (10) is rotated together with the connected rotary ring (13), and wherein the connection bolt (14), which is connected to the slide (6), is guided in the guide groove (16) of the rotary ring (13), and the slide (6) is driven from a starting position to an end position by means of the guide element (6') guided in the counterpart guide element (19).

12. A method for pivoting a portion of a one-piece molded part (20) present in an ejector component (2), wherein the portion is a second portion (20') which is connected to a first portion via a hinge,
**comprising the steps of**
a) deploying the ejector pin (21), which is arranged under the second portion (20'), and thereby releasing the second portion (20') from the mold cavity (8);
b) moving the slide (6) from its starting position by the method as claimed in claim 11, wherein
the slide tip (6") moves under the second portion (20') of the molded part (20) and sets the latter upright, and,
during the continuous onward movement of the slide (6) to the end position, the slide tines (7') travel around the ejector pin (21) and the slide tip (6") folds the second portion (20') of the molded part (20) over, and the slide tines (7') travel over the second portion (20') of the molded part (20) such that the second portion (20') of the molded part (20) comes to lie on the first portion of the molded part (20),
c) moving the slide (6) back to its starting position by rotating the drive ring (12) in the opposite direction to step b), before the ejection of the molded part (20) takes place by deployment of the ejector pins (22), which are present under the first portion of the molded part (20) and thus release the molded part (20) from the mold cavity (8).

13. A method for configuring the mold cavity (8) in a tool half (2, 3) during the injection molding, by arranging a shaping portion of a slide (6) in the cavity (8), wherein the arrangement of the slide (6) is carried out by a method as claimed in claim 11, and wherein the slide (6), after the injection molding, is moved back to its starting position by rotation of the drive ring (12) in the direction counter to that of arranging the slide in the cavity, before the ejection of the molded part (20) takes place.

## Revendications

1. Outil (1) pour le moulage par injection de pièces moulées en plastique, avec deux moitiés d'outil (2, 3), à savoir un composant de buse (3) et un composant d'éjecteur (2), qui peuvent être déplacées l'une par rapport à l'autre,
dans lequel une première des deux moitiés d'outil (2, 3)
- présente une plaque de moule (9) qui porte au moins un insert de moule (5) avec un grand nombre de cavités de moule (8) ou
- présente une plaque de moule (9) avec une plaque de support d'insert de moule (10) qui porte au moins un insert de moule (5) avec un grand nombre de cavités de moule (8),
dans lequel les cavités de moule (8) de la première des deux moitiés d'outil (2, 3) sont conçues pour former des pièces moulées (20) avec des cavités complémentaires présentes sur la deuxième des deux moitiés d'outil (2, 3),
dans lequel l'insert de moule (5) de chaque cavité de moule (8) est associé à une coulisse (6) qui est disposée au-dessus ou dans une surface de l'insert de moule (5) du côté de la cavité avec possibilité de se déplacer entre deux positions,
**caractérisé en ce que** la coulisse (6) présente au moins un élément de guidage (6') qui est en prise avec un élément de guidage opposé (19) dans l'insert de moule (5),
un goujon d'assemblage (14) guidé dans une rainure de guidage (16) d'une bague rotative (13) s'étendant à partir de la coulisse (6) en direction de la plaque de moule (9) ou de la plaque de support d'insert de moule (10), plusieurs goujons d'assemblage (14) de plusieurs coulisses (6) étant répartis sur la circonférence dans un nombre correspondant de rainures de guidage (16) le long de la circonférence de la bague rotative (13) et la bague rotative (13) étant reliée à une bague d'entraînement (12) disposée sur la plaque de moule (9) ou la plaque de support d'insert de moule (10).

2. Outil (1) selon la revendication 1, **caractérisé en ce que** la première des deux moitiés d'outil (2, 3) est le composant d'éjecteur (2) et la deuxième des deux moitiés d'outil (2, 3) est le composant de buse (3), lequel composant de buse (3) comprend de préférence une buse chauffante.

3. Outil (1) selon la revendication 1 ou 2, dans lequel les pièces moulées (20) sont des pièces moulées (20) d'une pièce, **caractérisé en ce que**
- la coulisse (6) est conçue pour déplacer la pièce moulée d'une pièce (20)
ou
- la pièce moulée d'une pièce (20) présente au moins deux parties et au moins une partie est assemblée par une charnière à une deuxième partie (20'), la coulisse (6) étant conçue pour faire pivoter la deuxième partie (20') assemblée par la charnière,
ou
- la coulisse (6) est munie d'une partie (31) qui dépasse dans la cavité (8) pendant le moulage par injection.

4. Outil selon l'une au moins des revendications 1 à 3, **caractérisé en ce que** la bague d'entraînement (12) est couplée de façon opérationnelle avec un moteur (30), la bague d'entraînement (12) présentant au moins une partie dentée (17) qui engrène avec une bielle d'entraînement (24) du moteur (30).

5. Outil selon l'une des revendications 1 à 4, **caractérisé en ce que** le grand nombre de cavités (8) définissent une face supérieure et **en ce qu'**un entraînement comprenant au moins la bague d'entraînement (12) est disposé en dessous des cavités (8) dans le sens vertical, la bague rotative (13) transformant un mouvement de rotation de la bague d'entraînement (12) en mouvement linéaire de la coulisse (6).

6. Outil selon l'une au moins des revendications 1 à 5, **caractérisé en ce que** le goujon d'assemblage (14) présente un roulement à rouleaux (15) qui est guidé dans la rainure de guidage (16) de la bague rotative (13) et/ou
chaque coulisse (6) présente, à l'extrémité du goujon d'assemblage (14) opposée à l'extrémité guidée dans la rainure de guidage (14), une partie de coulisse qui s'écarte à l'horizontale avec une extrémité de coulisse (6"), de préférence une extrémité de coulisse (6") avec une fourche de coulisse (7) munie de dents de coulisse (7').

7. Outil selon l'une au moins des revendications 1 à 6, **caractérisé en ce que** la coulisse (6) est supportée avec possibilité de mouvement linéaire dans un rail de guidage (6') et l'insert de moule (5) présente des rainures (29) dont l'orientation correspond au rail de guidage (6'), les goujons d'assemblage (14) des coulisses (6) étant guidés dans ces rainures (29).

8. Outil selon l'une au moins des revendications 1 à 7, **caractérisé en ce que** les plusieurs goujons d'assemblage (14) de plusieurs coulisses (6) sont disposés à égale distance les uns des autres dans le nombre correspondant de rainures de guidage (16) le long de la circonférence de la bague rotative (13), l'élément de guidage (6') et l'élément de guidage opposé (19) formant un rail de guidage (19).

9. Outil selon l'une au moins des revendications 2 à 8, **caractérisé en ce que** le composant d'éjecteur (2) présente des goupilles d'éjecteur (21, 22) qui peuvent être sorties de la surface de l'insert de moule (5) située du côté de la cavité après que la pièce moulée (20) a été coulée, la coulisse (6) étant conformée de telle manière que le mouvement de la goupille d'éjecteur (21, 22) peut être inversé dans son état d'éjection.

10. Outil selon la revendication 9, **caractérisé en ce que** la fourche de coulisse (7) est disposée de telle façon que les dents de coulisse (7') entourent les goupilles d'éjecteur (21, 22) dans l'état d'éjection.

11. Procédé pour déplacer une coulisse (6) de la première des deux moitiés d'outil (2, 3) d'un outil (1) selon l'une au moins des revendications 1 à 10, dans lequel la bague d'entraînement (12) disposée sur la plaque de moule (9) ou la plaque de support d'insert de moule (10) est entraînée en rotation en même temps que la bague rotative (13) assemblée, et dans lequel le goujon d'assemblage (14) qui est assemblé à la coulisse (6) est guidé dans la rainure de guidage (16) de la bague rotative (13) et la coulisse (6) est amenée au moyen de l'élément de guidage (6') guidé dans l'élément de guidage opposé (19) d'une position initiale à une position finale.

12. Procédé pour faire pivoter une partie d'une pièce moulée (20) présente dans un composant d'éjecteur (2), dans lequel la partie est une deuxième partie (20') qui est reliée par une charnière à une première partie, comprenant les étapes suivantes :
a) sortie de la goupille d'éjecteur (21) qui est disposée sous la deuxième partie (20') et ainsi détachement de la deuxième partie (20') hors de la cavité pour pièce moulée (8) ;
b) mouvement de la coulisse (6) à partir de sa position initiale par le procédé selon la revendication 11,
dans lequel l'extrémité de coulisse (6") passe sous la deuxième partie (20') de la pièce moulée (20) et la redresse, et
pendant le mouvement continu de la coulisse (6) dans la position finale, les dents de coulisse (7') entourent la goupille d'éjecteur (21) et l'extrémité de coulisse (6") retourne la deuxième partie (20') de la pièce moulée (20) et les dents de coulisse (7') passent par-dessus la deuxième partie (20') de la pièce moulée (20), de sorte que la deuxième partie (20') de la pièce moulée (20) vient reposer sur la première partie de la pièce moulée (20),
c) retour de la coulisse (6) dans sa position initiale par la rotation de la bague d'entraînement (12) en sens inverse de l'étape b) avant que la pièce moulée (20) soit éjectée par la sortie des goupilles d'éjecteur (22) qui se trouvent sous la première partie de la pièce moulée (20) et détachent ainsi la pièce moulée (20) de la cavité pour pièce moulée (8).

13. Procédé de conformation de la cavité pour pièce moulée (8) d'une moitié d'outil (2, 3) pendant le moulage par injection par la disposition dans la cavité (8) d'une partie d'une coulisse (6) définissant une forme, la disposition de la coulisse (6) étant effectuée par un procédé selon la revendication 11 et la coulisse (6) étant ramenée après le moulage par injection dans sa position initiale par la rotation de la bague d'entraînement (12) dans le sens inverse de l'introduction de la coulisse dans la cavité avant l'éjection de la pièce moulée (20).
